# EUROPEAN PATENT SPECIFICATION

(11) **EP 1 845 656 B1**
(45) Date of publication and mention of the grant of the patent: **13.07.2011**
(21) Application number: 06705591.3
(22) Date of filing: 26.01.2006
(51) Int. Cl.: H04L 12/24, H04L 12/26

(54) **A METHOD FOR IMPLEMENTING MASTER AND BACKUP TRANSMISSION PATH**
VERFAHREN ZUR IMPLEMENTIERUNG EINES MASTER- UND BACKUP-ÜBERTRAGUNGSWEGES
METHODE D'IMPLEMENTATION D'UN CHEMIN DE TRANSMISSION MAITRE ET DE SAUVEGARDE

(30) Priority: 02.02.2005 CN 200510004845
(43) Date of publication of application: 17.10.2007
(73) Proprietor: Huawei Technologies Co., Ltd., Longgang District, Shenzhen Guangdong 518129 (CN)
(72) Inventor: XU, Yongliang, Huawei Administration Building, Shenzhen, Guangdong 518129 (CN)
(74) Representative: Kreuz, Georg Maria
(86) International application number: PCT/CN2006/000170
(87) International publication number: WO 2006/081767

(56) References cited:
- EP-A- 1 111 860
- EP-A- 1 318 648
- EP-A2- 1 318 648
- US-A1- 2002 060 985
- US-A1- 2003 063 560
- US-A1- 2003 117 950
- SHARMA V ET AL: "Framework for Multi-Protocol Label Switching (MPLS)-based Recovery; rfc3469.txt;" IETF STANDARD, INTERNET ENGINEERING TASK FORCE, IETF, CH, February 2003 (2003-02), XP015009252 ISSN: 0000-0003
- CHANGCHENG HUANG ET AL: "Building Reliable MPLS Networks Using a Path Protection Mechanism" IEEE COMMUNICATIONS MAGAZINE, IEEE SERVICE CENTER, PISCATAWAY, US, vol. 40, no. 3, March 2002 (2002-03), pages 156-162, XP011092802 ISSN: 0163-6804
- DIMITRY HASKIN RAM KRISHNAN AXIOWAVE NETWORKS STATUS: "A Method for Setting an Alternative Label Switched Paths to Handle Fast Reroute; draft-haskin-mpls-fast-reroute-05.txt;" IETF STANDARD-WORKING-DRAFT, INTERNET ENGINEERING TASK FORCE, IETF, CH, no. 5, November 2000 (2000-11), XP015014123 ISSN: 0000-0004
- "Protection switching for MPLS networks; Y.1720 (04/03)" ITU-T STANDARD SUPERSEDED (S), INTERNATIONAL TELECOMMUNICATION UNION, GENEVA,, CH, no. Y1720 4/3, 6 April 2003 (2003-04-06), XP017404387

## Description

### Field of the Invention

The present invention relates to the technical field of DCN (Data Communication Network), in particular, to a method for realizing working/standby transmission path.

### Background of the Invention

Among many networks transmitting data based on IP, a DCN is a packet communication network specialized for carrying management information and distributed signaling message, and belongs to the scope of telecommunication supporting network and does not transmit the final traffic flow of users directly.

Specifically, a physical transmission link in a DCN refers to an in-fiber control channel and an out-of-fiber control channel. The in-fiber control channel can be an ECC (Embedded Control Channel), such as a DCC (Data Communications Channel) in an SDH (Synchronous Digital Hierarchy), or a GCC (General Communication Channel), an dedicated optical monitoring channel in an OTN (Optical Transport Network), and so on. Moreover, the out-of-fiber control channel (which only transmits management information and distributed signaling message, and does not transmit service message) can be an Ethernet transmission path.

A network layer of the DCN conforms to TCP/IP protocol. In other words, each node in a DCN can query a preset routing table according to destination IP address information encapsulated in a transmitted packet to obtain next hop node information and then forward the packet. The routing table configured in each node can be based on static route configuration protocol, or dynamic routing protocol,. At present, dynamic routing protocol is usually adopted to generate a routing table because dynamic routing protocol , because it has the advantage that network failure can be prevented from occurring on a packet by dynamically modifying the routing table configuration. Thus, a DCN can dynamically refresh the routing table configured in each node according to the network failure status. After the whole-network routing table is refreshed synchronously, a packet to be transmitted can be delivered to the destination node, keeping away from the paths on which failure occurs. Therefore, in a DCN, by realizing working/standby transmission path by means of routing tables in conjunction with dynamic routing protocol, strong fault-tolerance capacity can be obtained.

However, in the method for realizing working/standby transmission path in a DCN by means of routing tables in conjunction with dynamic routing protocol, after a failure occurs on the network, the nodes on a transmission path on which the failure occurs need to diffuse the failure information to other nodes hop by hop from near to far according to dynamic routing protocol, and then each node re-computes the routing table. During the update of the routing table (i.e., before the whole-network routing table is refreshed synchronously), it is possible that the routing table in each node is not consistent with each other. As a result, part of the packets can not be forwarded to the destination node correctly and be discarded due to a limitation on forwarding times or related queue overflow. Moreover, the time needed for the update of the routing table relates to the scale of the network. For a small size network, the time can be controlled at second level, but for a large-size network, the time can be several minutes, which sometimes is intolerable for the transmission of the management information and distributed signaling message and can cause the loss of some very important management information. For example, failure notice message and so on may be discarded during the transmission process.

In addition, according to a principle of MPLS (Multi-Protocol Label Switching) technology, a plurality of logical LSPs (Label Switched Paths) can be established on the network layer of a DCN. Thus, when a packet to be transmitted passes through an LSP, it can be forwarded directly according to the label value (Label) encapsulated in the packet, so it can be avoided to look up the routing table. For a packet, LSP is a "Tunnel", i.e., a virtual packet forwarding link. Thus, by establishing two or more non-overlapped LSPs between any two nodes, a mutual protection relation can be formed among these LSPs. In other words, when one LSP is broken down due to network failure, the packet can be switched to other standby LSPs for forwarding. Thus, MPLS 1+1 protection or 1:1 (N) protection solution (for MPLS 1+1 protection or 1:1 (N) protection solution, reference can be made to ITU-T G.7712) can be formed. The advantage of the method for realizing working/standby transmission path in a DCN via LSP in the MPLS lies in that: a packet can be rapidly switched from an LSP on which failure occurs to other standby LSPs for forwarding. The duration of the switching process can be shorter than 50 ms, so that loss of packets during the transmission process can be reduced.

However, in the method for realizing working/standby transmission path in a DCN via LSP in the MPLS, two or more LSPs need to be pre-established between any two nodes on which a communication message is to be delivered. Thus, for a DCN with N nodes, if it is required to establish an LSP connection between any two nodes, the total number of LSPs to be established will be in direct proportion to the square of node number N. Therefore, establishment and maintenance workload of establishing and maintaining N square LSPs is very heavy, and the extensibility of DCN will be limited. In addition, when two or more failures occur on the network resources, failures may be occur on the working LSP and standby LSP simultaneously. Therefore, communication can be broken down. In such case, the reliability of packet forwarding will be lower than that of the method for realizing working/standby transmission path by means of routing tables in conjunction with dynamic routing protocol.

[0007'] EP-A-1 111 860 (NORTEL NETWORKS LTD [CA] 27 June 2001) disclosed a computer network that provides protection switching to reroute data packets in the event of a network link failure. US 2003/063580 A1 (JENQ YAU-REN [US] ET AL3 April 2003) disclosed a protection switching technique that makes more efficient use of network resources. EP-A 1 318 648 (NORTEL NETWORKS LTD [CA]11 June 2003) disclosed a method to provide path recovery resources in case of link or node failure. "Framework for Multi-Protocol Label Stitching (MPLS)-based Recovery: rfo3469.txt:" (SHARMA V ET AL. IETF STANDARD, INTERNET ENGINEERING TASK FORCE, IETF, CH, February 2003, XP015009252 ISSN: 0000- 0003) disclosed two basic models for path recovery and scope of recovery. "Building Reliable MPLS Networks Using a Path Protection Mechanism" (CHANGCHENG HUANG ET AL, IEEE COMMUNICATIONS MAGAZINE, IEEE SERVICE CENTER PISCATAWAY, US, vol. 40, no. 3, March 2002 pages 156-162, XPO'∼ 1092802 ISSN: 0163-6804) disclosed a path protection mechanism. "A Method for Setting an Alternative Label Switched Paths to Handle Fast. Reroute:aff-haskin-mpls-fast-reroute-05.txt:" (DIMITRY RASKIN RAM KRISHNAN AXIOWAVE NETWORKS STATUS. IETF STANDARD-WORKING-DRAFT INTERNET ENGINEERING TASK FORCE. IETF, CH no. November 2000 XP015014123 ISSN: 0000-0004) disclosed method for setting alternative label switched path with the objective to provide a single failure protection. "Protection switching for MPLS networks: Y.1720 (04103)" (ITU-T STANDARD SUPERSEDED (S), INTERNATIONAL TELECOMMUNICATION UNION; GENEVA CH. no. Y1720 4/3 6 April 2003, XPO174043871 disclosed requirements and mechanisms for 1+1 and 1:1 protection switching functionality for the user-plane in MPLS networks.

### Summary of the Invention

An object of the present invention is to provide a method for realizing working/standby transmission path that can improve the reliability of packet forwarding and reduce maintenance workload and maintenance complexity of the working/standby transmission path.

To solve the above problem, the invention employs the following solutions.

A method for realizing working/standby transmission path, according to claim 1, and respectively, an apparatus for realizing working / stand by transmission path according to claim 13.

The network is a network for transmitting data via IP.

In the method for realizing working/standby transmission path, N pairs of LSPs are configured for each physical transmission link, and transmission directions of each pair of LSPs are opposite to each other, N being a natural number.

In the method for realizing working/standby transmission path, configuring a standby LSP for the physical transmission link is accomplished by one of:

using RSVP-TE (Resource Reservation Protocol-Traffic Extension);

using CR-LDP (Constraint-Based Label Distribution Protocol); and

configuring a label forwarding table in each node in the DCN.

The physical transmission link is physically independent of a physical transmission link through which the standby LSP passes.

The method for realizing working/standby transmission path further includes: when the physical transmission link on which failure occurs recovers to normal, forwarding the packet transmitted on the standby LSP to the physical transmission link that has recovered to normal for transmission.

A cost value of the standby LSP is configured as greater than a cost value of the physical transmission link protected by the standby LSP and less than a sum of cost values of physical transmission links through which the LSP passes.

In the method for realizing working/standby transmission path, if at least two pairs of LSPs are configured for the physical transmission link, when the failure occurs on the physical transmission link, the packet to be transmitted on the physical transmission link is forwarded to a standby LSP with a minimum cost value for transmission.

In the method for realizing working/standby transmission path, forwarding the packet to be transmitted on the physical transmission link on which the failure occurs to a standby LSP for transmission is accomplished by one of:

modifying a list item directed to the physical transmission link on which the failure occurs in a routing table saved in a source node on the physical transmission link on which the failure occurs to a list item directed to the standby label switched path; and

redirecting the packet transmitted on the physical transmission link on which the failure occurs to a standby LSP for transmission in an interface driver of the physical transmission link on which the failure occurs.

The physical transmission link is an in-fiber control channel or an out-of-fiber control channel.

The method for realizing working/standby transmission path further comprises detecting whether a failure occurs on the physical transmission link and the standby LSP by periodicity sending a failure detection message to the DCN.

The method for realizing working/standby transmission path further comprises detecting whether a failure occurs on a physical transmission link composed of the in-fiber control channel via optical network alarm detecting mechanism.

In the method for realizing working/standby transmission path, when the failure occurs on the physical transmission link while the standby LSP works normally, two end nodes of the physical transmission link on which the failure occurs delay delivering the failure information to other nodes via dynamic routing protocol; when the failure occurs on the physical transmission link and the standby LSP simultaneously, the two end nodes of the physical transmission link on which the failure occurs deliver the failure information to other nodes in time via dynamic routing protocol.

In the method for realizing working/standby transmission path according to the invention, by configuring a standby LSP for each physical transmission link in a DCN, a corresponding physical transmission link can be protected using the standby LSP, so that when a failure occurs on the physical transmission link, a packet transmitted on the physical transmission link can be forwarded to the standby LSP for transmission. Thus, when a failure occurs on a physical transmission link on which a packet is to be transmitted, the packet can be forwarded to a standby LSP for transmission in time. As a result, the reliability of packet forward can be improved, and the loss of packets during the transmission process can be reduced greatly and thus transmitting management information and distributed signaling message in a DCN is facilitated.

Meanwhile, because the LSPs configured for the physical transmission links is in direct proportion to the physical transmission links to be protected. In other words, N (N is a natural number, which is usually taken as 1) pairs of LSPs are configured for a physical transmission link, wherein the transmission directions of each pair of LSPs are opposite to each other. Thus, a disadvantage can be avoided that a total number of LSPs to be established should be in direct proportion to the square of node number N when the prior art method for realizing DCN working/standby transmission path via LSP in the MPLS is employed. As a result, the number of LSPs to be configured can be reduced greatly. Thus, the maintenance workload and maintenance complexity of the working/standby transmission path in a DCN can be reduced.

### Brief Description of the Drawings

Figure 1 is a flow chart showing the main principle of the invention;

Figure 2 is a structural topology map of the working/standby transmission path according to the invention;

Figure 3 is a schematic diagram showing the configuration of the cost value of each physical transmission link shown in Figure 2 and the cost value of the corresponding standby LSP;

Figure 4 is a topology state diagram of a path saved in each node in the solution of the invention;

Figure 5 is a topology schematic diagram showing the shortest path tree obtained by node A after computation in the solution of the invention;

Figure 6 is a topology schematic diagram showing the shortest path tree obtained by node B after computation in the solution of the invention;

Figure 7 is a topology structural diagram showing the shortest path tree obtained by node A via an update processing after a failure occurs on physical transmission link B-C in the solution of the invention;

Figure 8 is a topology structural diagram showing the shortest path tree obtained by node B via an update processing after failure occurs on physical transmission link B-C in the solution of the invention; and

Figure 9 is a schematic diagram showing a switching process in which the packet flow originally forwarded via physical transmission link A-B is forwarded to a standby LSP (A-D-B) for forwarding after a failure occurs on the physical transmission link A-B in the method for realizing working/standby transmission path according to the invention.

### Detailed Description of the Embodiments

The embodiments of the invention will now be illustrated in detail in conjunction with the drawings.

The invention can be applied to a network for transmitting data via IP, such as DCN or Internet, etc. It will now be illustrated by taking the case in which the invention is applied to a DCN as an example. In the method for realizing working/standby transmission path based on a DCN, a corresponding standby LSP is configured for each physical transmission link in the DCN, so that when failure occurs on a physical transmission link, a packet transmitted on the physical transmission link can be forwarded to a standby LSP for transmission in time, thus loss of packets can be reduced; at the same time, the maintenance workload and maintenance complexity of the working/standby transmission path can be reduced.

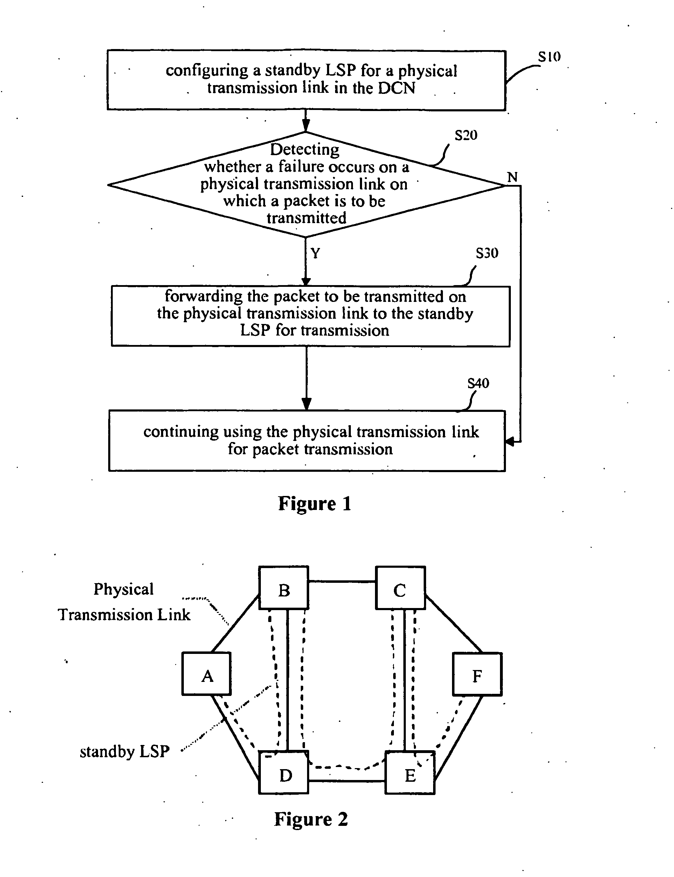

Figure 1 is a flow chart showing the main principle of the method for realizing working/standby transmission path based on a DCN according to the invention. The process to be realized is as follows:

Step S10: A standby LSP is configured for each physical transmission link in the DCN.

In the DCN, the physical transmission link can be composed of an in-fiber control channel, such as ECC; or, the physical transmission link can be composed of an out-of-fiber control channel (such as physical transmission media using out-of-fiber Ethernet as a DCN). The method of the invention can be applied to the physical transmission links composed of either of the two transmission media.

Because LSPs of MPLS technology usually support the unidirectional transmission of packets, and the LSP configured for a physical transmission link here should have the property of bidirectional transmission so as to protect the physical transmission link in bidirectional transmission modes respectively, two LSPs in opposite directions need to be configured for each physical transmission link. In other words, a pair of LSPs with opposite transmission directions needs to be configured.

Certainly, N (N is a natural number, which is usually taken as 1) pairs of LSPs can also be configured for each physical transmission link in the DCN wherein each pair of LSPs has opposite transmission directions. In other words, a plurality of different LSPs can be configured for a physical transmission link. Thus, when failure occurs on the physical transmission link and one or more LSPs for the physical transmission link simultaneously, the packet can also be forwarded to a normal LSP for the physical transmission link for transmission. Therefore, it can be further ensured that packets will not be lost during the transmission process, so that it is favourable to improve the reliability of the transmission of management information and distributed signaling message in a DCN.

The protected physical transmission link and the physical transmission link through which the standby LSP passes are physically independent; i.e., failure-uncorrelated. In other words, the physical transmission link through which the configured LSP passes and the protected physical transmission link are mutually independent in a physical layer, and occupy different physical transmission links respectively. Thus, the failure occurring on the standby LSP can be uncorrelated to the failure occurring on the protected physical transmission link. As a result, a failure occurs on a physical transmission link will not cause a failure to occur on the standby LSP, so that the object of protecting the physical transmission link via the standby LSP can be attained.

Because N pairs of LSPs with opposite transmission directions are configured for a physical transmission link to protect the physical transmission link, the number of the LSPs configured is in direct proportion to the number of the physical transmission links. Thus, the disadvantage in the method of the prior art for realizing DCN working/standby transmission path employing MPLS technology can be avoided that a number of LSPs to be configured is a square number of the node number N in the DCN, and a problem of increasing the maintenance workload and maintenance complexity of the working/standby transmission path and so on can be avoided.

In a topology structural diagram of a DCN, a configured LSP and a physical transmission link it protects are in a relation of parallel links. In other words, the physical transmission link and the standby LSP originate from the same source node and end at the same destination node.

Meanwhile, it should be ensured that a packet is forwarded to the physical transmission link, rather than the configured standby LSP, for transmission when the physical transmission link works normally in the DCN. Because in normal condition, the standby LSP is a long path compared with the physical transmission link to be protected and its routing is not optimized.

Figure 2 shows a structural topology map of working/standby transmission paths constructed by the method for realizing working/standby transmission path based on a DCN according to the invention. In Figure 2, A-F represent six network nodes in the DCN, i.e., optical cross-node. Thus, in addition to transmitting management information and distributed signaling, the physical transmission links formed among these network nodes can be further used for transmitting traffic flow. The physical transmission links formed among these nodes include A-B, A-D, B-C, B-D, D-E, C-E, C-F and E-F, and these physical transmission links are failure-uncorrelated. In other words, these physical transmission links pass through different transmission media such as optical cable, pipe, bridge, and so on, and no failure-related problems will occur. These physical transmission links are used for transmitting packets carrying management information and distributed signaling message. Here, it can be hypothesized that the cost value of each physical transmission link is 100 (IP routing protocol should ensure that a packet passes through the physical transmission link with the minimum sum of cost values); and nodes A-F all have the MPLS forwarding capacity.

The process of configuring a standby LSP for each physical transmission link in the DCN can be accomplished according to RSVP-TE (Resource Reservation Protocol-Traffic Extension); or, it can be accomplished according to CR-LDP (Constraint-Based Label Distribution Protocol). Alternatively, a static LSP can also be realized by configuring a label forwarding table in each node of the DCN respectively. For the above signaling protocol for realizing LSP, reference can be made to the related standard text specified in IETF (Internet Engineering Task Force). Specifically, for RSVP-TE, reference is made to RFC3209; and for CR-LDP, reference is made to RFC3212.

Meanwhile, to ensure that the working/standby transmission path in the DCN realized in the method of the invention can transmit packets reasonably, the cost value of the standby LSP can be configured as greater than the cost value of the physical transmission link to be protected by the standby LSP and less than the sum of the cost value of each physical transmission link through which the standby LSP passes, so that when a failure occurs on the physical transmission link, the packet can be forwarded to the standby LSP for transmission; and when the physical transmission link works normally or recovers to normal, the packet can be automatically forwarded to the physical transmission link for transmission (because the cost value of the physical transmission link is less than that of the standby LSP, and the packet flow transmitted via the LSP originally can be automatically forwarded to the physical transmission link with a smaller cost value for transmission after the routing table is updated).

For the case in which at least two pairs of LSPs are configured for each physical transmission link, when a failure occurs on a physical transmission link, packets to be transmitted on the physical transmission link is first forwarded to a standby LSP with the minimum cost value for transmission.

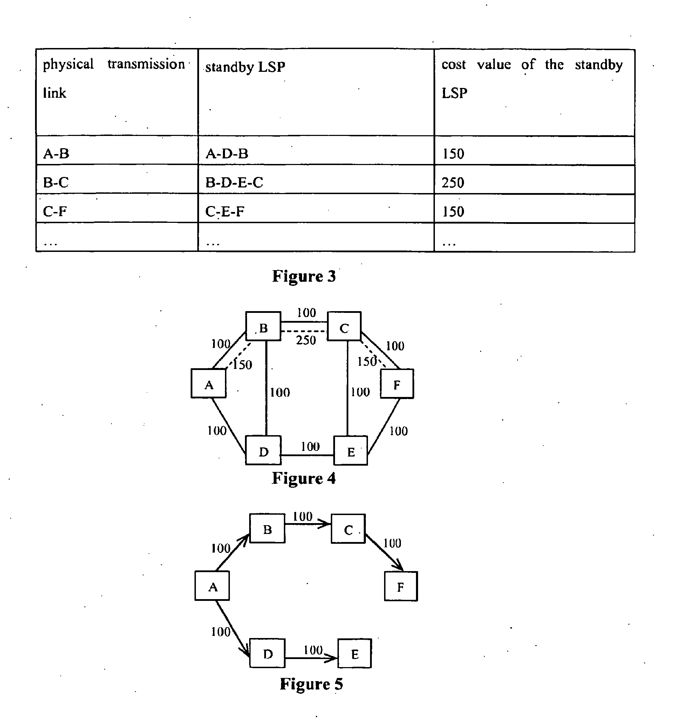

In the DCN as shown in Figure 2, the standby LSP of physical transmission link A-B is A-D-B. Because it has been hypothesized above that the cost value of physical transmission link A-B is 100, and the standby LSP (A-D-B) passes through two physical transmission links A-D and D-B, the sum of the cost values of the physical transmission links through which the standby LSP (A-D-B) passes is 200. The actual cost value of the standby LSP (A-D-B) can be set as 150, which is between the cost values 100 and 200. Specifically, for the configuration of the cost value of each physical transmission link and the cost value of the corresponding standby LSP shown in Figure 2, reference can be made to Figure 3.

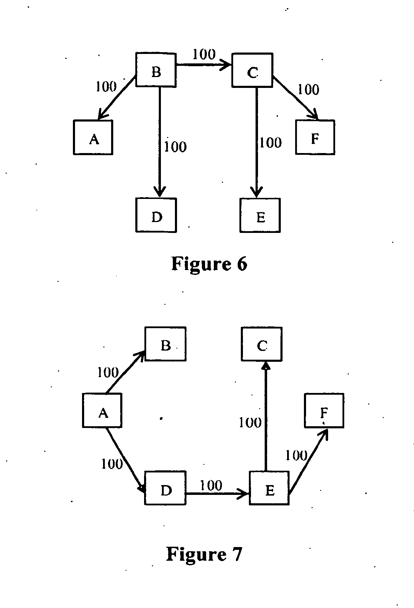

Each node in the DCN delivers the configuration of its physical transmission link and the corresponding standby LSP to each of the other nodes in the network via a Link State Advertisement message according to dynamic routing protocols, such as OSPF (Open Shortest Path First). Thus, each node in the DCN can obtain a path topology state diagram. For the specific formation of the path topology state diagram, reference is made to Figure 4. Then, each node in the DCN computes the shortest path to other nodes based on the shortest path algorithm specified in OSPF protocol, taking itself as the starting point, and obtains its IP routing table. Figure 5 shows a topology schematic diagram of the shortest path tree obtained by node A after computation according to the method of the invention for realizing working/standby transmission path based on DCN. Figure 6 shows a topology schematic diagram of the shortest path tree obtained by node B after computation according to the method of the invention for realizing working/standby transmission path based on the DCN. Each node can construct its IP routing table according to the shortest path tree obtained. As shown in Figure 5, a next-hop node to which a packet sent from node A to destination node F will be sent is node B, and a physical transmission link for transmitting the packet is A-B. For OSPF protocol, reference is made to RFC2328. In practice, the OSPF protocol can divide a DCN into several areas, which does not have any influence on the implementation of the invention.

As shown in Figure 1, in Step S20, it is detected whether a failure occurs on a physical transmission link on which a packet is to be transmitted. If yes, turn to Step S30; otherwise, turn to Step S40. The step of detecting whether a failure occurs on the physical transmission link can be accomplished by periodically sending a failure detection message (Hello message) to the DCN via the management plane layer of the DCN, and the Hello message can also detect whether a failure occurs on the standby LSP; and when the physical transmission link is composed of an ECC, it can also detect whether a failure occurs on the physical transmission link via optical network alarm detecting mechanism.

In OSPF protocol, a Hello message is regularly sent via the management plane layer in the DCN, by this way, working state of the working/standby transmission path in a DCN can be detected. In other words, the specific working state of each physical transmission link and the corresponding standby LSP can be detected. Meanwhile, to reduce a transmission bandwidth occupied during the sending process of the Hello message, the sending period of the Hello message as set cannot be too short. Thesending period is about 10 seconds usually. However, to shorten a route convergence process of each node in the DCN, the sending period of the Hello message should be shortened appropriately; for example, it can be set as 1 second or shorter. In other words, the sending period of the Hello message as a failure discovery mechanism needs to be compromised between the rapidity of failure detection and the dedicated overhead of resources.

When the physical transmission link in the DCN is composed of an ECC, an optical network alarm detecting mechanism based on port level can also taken as a supplementary of the Hello message detecting mechanism. For example, in an SDH network, working state of a physical transmission link in the DCN can be determined by detecting an alarm message of a regeneration section or multiplex section. In other words, if alarm of LOS (Lost Of Signal) or LOF (Lost Of Frame) appears, it indicates that break-down failure occurs on an associated physical transmission link. Thus, a failure positioning efficiency of the physical transmission link can be improved greatly via the optical network alarm detecting mechanism. When a failure occurs, a packet transmitted on a related physical transmission link on which the failure occurs can be switched to the standby LSP for transmission as quickly as possible. Because the physical transmission link in the DCN is usually bidirectional, if only unidirectional transmission failure occurs on the physical transmission link, the downstream nodes of the physical transmission link on which the failure occurs will detect the failure state immediately. An SDH, a Sonet (Synchronous Optical Network), an OTN (Optical Transport Network) and so on can notify the opposite node of the failure information in REI/RDI (Remote Error Indication/ Remote Defect Indication) mode. Thus, no matter it is unidirectional transmission failure or bidirectional transmission failure that occurs on the physical transmission link, the nodes on both sides of the physical transmission link on which the failure occurs can detect the failure state quickly.

When a failure occurs on a physical transmission link in the DCN and the standby LSP works normally, the two end nodes of the physical transmission link on which the failure occurs need to delay delivering the failure information to other nodes in the network using dynamic routing protocol; but when the failure occurs on the physical transmission link and the standby LSP simultaneously, the two end nodes of the physical transmission link on which failure occurs need to deliver the failure information to other nodes in the network in time via dynamic routing protocol. In other words, the delayed delivery of failure information only applies to the situation in which the failure occurs on the physical transmission link while the standby LSP works normally; in other situations, the failure state of the transmission path needs to be delivered immediately. By using the optical network alarm detecting mechanism based on port, the time for failure recovery of a physical transmission link in the DCN can be decreased to within 50 ms. Therefore, the reliability of packet forwarding in the DCN can be further improved.

The reasons that the node in a DCN delays delivering the failure state information to other nodes in the network via dynamic routing protocol (such as OSPF protocol and so on) when the failure occurs on a physical transmission link lie in that:

(1) if the two end nodes of the physical transmission link on which the failure occurs deliver the failure state information to the whole network immediately when the failure is detected, the IP routing table of each node in the network will be changed, and during this process, it is possible that the IP routing table in each node is inconsistent with each other, thus the communication process between each node in the DCN will possibly be influenced;

(2) after the failure occurs on a physical transmission link, because the packet sent by the two end nodes of the physical transmission link on which the failure occurs may not reach the destination node normally, the sending node usually resends the packet for several times. Thus, the traffic between any two nodes in the DCN and between each node and the network management system will be increased, and at this point, "message storm" may take place in the network. If the state update information of dynamic routing protocol, based on OSPF is delivered and the routing table is re-computed by each node according to the route state update information at the same time, the communication traffic and computation load will be further increased. Therefore, the two end nodes of the physical transmission link on which the failure occurs delay delivering the failure state information (the actual delay time is set according to specific network situation), so the related node can deliver the route state update information in time on an appropriate occasion, and the IP routing table of each node can be updated and optimized in time, because the "message storm" has ended at this moment. Therefore, the influences of the update process of IP routing tables on the network load can be reduced greatly.

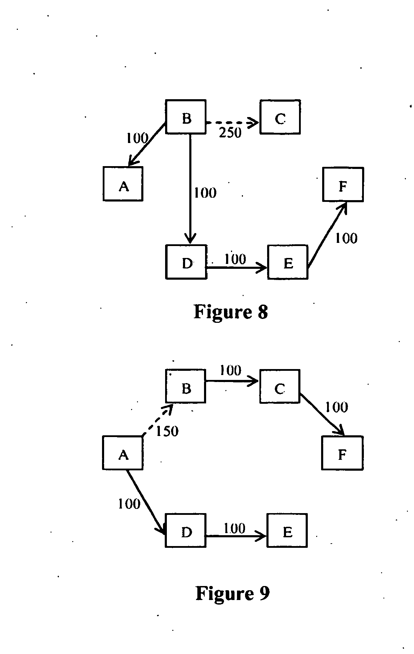

As shown in Figure 2, if the failure occurs on physical transmission link B-C, the packet on physical transmission link B-C will be first switched to the standby LSP (B-D-E-C) of physical transmission link B-C; and each node re-computes its shortest path tree via dynamic route configuration based on OSPF protocol after a time delay, so that an optimized IP routing table that has been refreshed is obtained. Figure 7 is a topology structural diagram showing the shortest path tree obtained by node A via an update processing after the failure occurs on physical transmission link B-C according to the method of the invention for realizing working/standby transmission path based on DCN; and Figure 8 is a topology structural diagram showing the shortest path tree obtained by node B via an update processing after failure occurs on physical transmission link B-C according to the method of the invention for realizing working/standby transmission path based on the DCN.

At the same time, in the DCN, the two end nodes of the physical transmission link on which the failure occurs can diffuse the failure information to other nodes in the network via OSPF protocol or IS-IS (Intermediate System to Intermediate System) protocol. For the specific standard of IS-IS protocol, reference can be made to ISO Standard No. 8473 (Intermediate System to Intermediate System Intra-Domain Routeing Exchange Protocol for use in Conjunction with the Protocol for Providing the Connectionless-mode Network Service).

As shown in Figure 1, in Step S30, when it is detected that a failure occurs on the physical transmission link, a packet to be transmitted on the physical transmission link is forwarded to the standby LSP for transmission. However, if the standby LSP is also broken down due to failure (the failure information of the standby LSP can also be detected via Hello message of OSPF protocol) after the packet is automatically switched to the standby LSP for transmission when failure occurs on a physical transmission link, the whole-network IP routing table needs to be updated using the process of the prior art via dynamic routing protocol, so as to ensure the reliability of packet transmission in the DCN.

In addition, when the packet is transmitted on the standby LSP, if the failure state of the corresponding physical transmission link is eliminated during the process, i.e., the corresponding physical transmission link recovers to normal w6rking state, the packet transmitted on the standby LSP needs to be forwarded to the physical transmission link that recovers to normal for transmission. Because after the physical transmission link is restored, the state of the related physical transmission link changes from Down (which means that the working state of the physical transmission link is abnormal) to Up (which means that the working state of the physical transmission link is normal). At this point, the situation in which the physical transmission link recovers to normal can also be detected based on the Hello message of OSPF protocol, thus the dynamic route configuration can be updated again via OSPF protocol, so as to update the whole-network IP routing table. Moreover, because the cost value of the physical transmission link that recovers to normal is less than that of the standby LSP, the packet flow transmitted on the standby LSP previously will be automatically forwarded to the physical transmission link that has recovered to normal working state for transmission.

As shown in Figure 1, in Step S40, when no failure is detected on the physical transmission link, the physical transmission link with a lower cost value will continue to be used for packet transmission.

During the above process, forwarding the packet to be transmitted on the physical transmission link on which the failure occurs to the standby LSP for transmission can be accomplished by modifying a list item directed to the physical transmission link on which the failure occurs in the IP routing table saved in a source node on the physical transmission link on which the failure occurs as directed to a list item of the corresponding standby LSP. In other words, when a node in the DCN detects that a failure occurs on a physical transmission link related to the node and a corresponding standby LSP works normally, the node can modify the routing table items in which the forwarding interface is directed to the failed physical transmission link in the IP routing table saved therein as directed to the forwarding interface of the corresponding LSP. Thus, the packet can be forwarded from the physical transmission link on which the failure occurs to a normal LSP for transmission.

In addition, forwarding the packet to be transmitted on the physical transmission link on which the failure occurs to the standby LSP for transmission can also be accomplished by redirecting the packet transmitted on the physical transmission link on which the failure occurs to the standby LSP for transmission in an interface driver of the physical transmission link on which the failure occurs. In other words, the packet actually transmitted is redirected in the interface driver of the physical transmission link, which means that the packet previously forwarded on the physical transmission link (herein, the packet refers to packet other than OSPF protocol packet, because OSPF protocol packets need to reflect the actual working state of the network) is forwarded to a preconfigured standby LSP for transmission. In the redirecting process, the IP routing table in the DCN does not need to be modified.

The above two modes will now be illustrated by an example:

Figure 9 is a schematic diagram showing a switching process in which a packet flow originally forwarded via physical transmission link A-B is forwarded to a standby LSP (A-D-B) for transmission, after a failure occurs on the physical transmission link A-B according to the method of the invention for realizing working/standby transmission path based on the DCN. In Figure 9, a dashed line path between A and B refers to the standby LSP (A-D-B). If the mode of IP routing table modification manner is employed, the forwarding output interface corresponding to the list item, of which the destination address is node B, C or F, in the IP routing table saved in node A needs to be modified as the output interface corresponding to the standby LSP (A-D-B). But, if the mode of transmission path redirection is employed, the routing table saved in node A does not need to be modified, and the packet whose destination address is node B, C or F is sent to physical transmission link A-B on which the failure occurs, as directed by the routing table. If the interface driver finds that the failure occurs on the current physical transmission link, it redirects the packet to the preconfigured LSP (A-D-B) for sending. The packets forwarded in the mode of redirection do not include OSPF protocol packets.

Now, an embodiment of the method for realizing working/standby transmission path based on DCN according to the invention will be illustrated in conjunction with the structural diagram shown in Figure 2. As shown in Figure 2, when node A in the DCN needs to send packet information to node F, node A forwards the packet via nodes B and C to node F according to the IP routing table configured therein. During this process, if the physical transmission link B-C between node B and node C is broken down due to failure, node B and node C can know that the physical transmission link B-C has turned from "available" into "unavailable" according to the failure information detected, and the packet on physical transmission link B-C is switched to the corresponding LSP (B-D-E-C) for transmission Because the connectivity of packet forwarding on physical transmission link B-C can be maintained, the routing update state message between node B and node C does not need to be delivered immediately via dynamic routing protocol and the routing table of other nodes does not need to be modified immediately either. Subsequently, the optical service influenced by the failure on optical transmission path A-B-C-F is switched to the recovered path A-D-E-F for transmission; when the downstream node F of the optical transmission path A-B-C-F on which failure occurs detects that the optical transmission path is broken down, the downstream node F sends the failure state information to node A. The control information which carries the failure state information is forwarded on the DCN through the following process:

First of all, the packet is forwarded to node C via physical transmission link C-F; node C forwards the packet via nodes E and D to node B through the standby LSP of physical transmission link B-C, and this forwarding process is realized via label forwarding in the standard MPLS technology, and for the packet forwarding on IP network layer, in this forwarding process, a packet is directly forwarded via node C to node B (because MPLS forwarding is a forwarding mode between data link layer and network layer, which is invisible to the network layer); then, node B forwards the packet to node A. It can be seen that: if the technical solution of the invention is not employed, in other words, if the standby LSP of physical transmission link B-C does not exist, the forwarding process may fail, because the update of the routing table is not completed when the failure state information sent by node F reaches node C.

Additional advantages and modifications will readily occur to those skilled in the art. Therefore, the invention in its broader aspects is not limited to the specific details and representative embodiments shown and described herein. Accordingly, various modifications and variations can be made without departing from the scope of the invention as defined by the appended claims.

## Claims

1. A method for realizing working/standby transmission path, comprising the steps of :
configuring (S10) a standby Label Switched Path for a physical transmission link in a network; and
forwarding (S30) a packet to be transmitted on the physical transmission link to the standby Label Switched Path for transmission when a failure occurs on the physical transmission link,
**characterized by** further comprising:
when the failure occurs on the Physical transmission link while the standby Label Switched Path works normally, two end nodes of the physical transmission link on which the failure occurs delay delivering failure information to other nodes via dynamic routing protocol; when the failure occurs on the Physical transmission link and the standby Label Switched Path simultaneously, the two end nodes of the physical transmission link on which the failure occurs deliver failure information to other nodes in time via dynamic routing protocol.

2. The method for realizing working/standby transmission path according to claim 1, wherein configuring a standby Label Switched Path for the physical transmission link is accomplished by one of:
using Resource Reservation Protocol-Traffic Extension;
using Constraint-Based Label Distribution Protocol; and
configuring a label forwarding table in each node in the network.

3. The method for realizing working/standby transmission path according to claim 1 or 2, wherein, N pairs of Label Switched Paths are configured for the physical transmission link, and transmission directions of each pair of Label Switched Paths are opposite to each other, wherein N is a natural number.

4. The method for realizing working/standby transmission path according to claim 1, 2 or 3, wherein the physical transmission link is physically independent of a physical transmission link through which the standby Label Switched Path passes.

5. The method for realizing working/standby transmission path according to claim 4, further comprising: when the physical transmission link on which the failure occurs recovers to normal, forwarding the packet transmitted on the standby Label Switched Path to the physical transmission link that has recovered to normal for transmission.

6. The method for realizing working/standby transmission path according to claim 4, wherein: a cost value of the standby Label Switched Path is configured as greater than a cost value of the physical transmission link protected by the standby Label Switched Path and less than a sum of cost values of physical transmission links through which the Label Switched Path passes.

7. The method for realizing working/standby transmission path according to claim 6, wherein: if at least two pairs of Label Switched Paths are configured for the physical transmission link, when the failure occurs on the physical transmission link, the packet to be transmitted on the physical transmission link is forwarded to a standby Label Switched Path with a minimum cost value for transmission.

8. The method for realizing working/standby transmission path according to claim 1, 5 or 6, wherein the forwarding the packet to be transmitted on the physical transmission link on which the failure occurs to the standby Label Switched Path for transmission is accomplished by one of:
modifying a list item directed to the physical transmission link on which the failure occurs in a routing table saved in a source node on the physical transmission link on which the failure occurs to a list item directed to the standby label switched path; and
redirecting a packet transmitted on the physical transmission link on which the failure occurs to the standby Label Switched Path for transmission in an interface driver of the physical transmission link on which the failure occurs.

9. The method for realizing working/standby transmission path according to claim 1, wherein, the physical transmission link is an in-fiber control channel or an out-of-fiber control channel

10. The method for realizing working/standby transmission path according to claim 9, further comprising detecting whether a failure occurs on the physical transmission link and the standby Label Switched Path by periodicity sending a failure detection message to the network.

11. The method for realizing working/standby transmission path according to claim 9. further comprising detecting whether a failure occurs on a physical transmission link composed of the in-fiber control channel via an optical network alarm detecting mechanism.

12. The method for realizing working/standby transmission path according to claim 1, wherein the network is a network for transmitting data via IP.

13. An apparatus for realizing working/standby transmission path, comprising:
means for configuring a standby Label Switched Path for a physical transmission link in a network; and
means for forwarding a packet to be transmitted on the physical transmission link to the standby Label Switched Path for transmission when a failure occurs on the physical transmission link,
**characterized in that** the apparatus further comprises:
means for delay delivering failure information to other nodes by two end nodes of the physical transmission link on which the failure occurs via dynamic routing protocol when the failure occurs on the physical transmission link while the standby Label Switched Path works normally, and delivering failure information to other nodes by two end nodes of the physical transmission link on which the failure occurs in time via dynamic routing protocol when the failure occurs on the physical transmission link and the standby Label Switched Path simultaneously.

## Patentansprüche

1. Verfahren zum Herstellen eines Arbeits-/Bereitschaftszustands-Übertragungswegs, das die folgenden Schritte enthält:
Konfigurieren (S10) eines Bereitschaftszustands-Etikettvermittlungswegs für eine physikalische Übertragungsverbindung in einem Netz; und
Weiterleiten (S30) eines auf der physikalischen Übertragungsverbindung zu übertragenden Pakets zu dem Bereitschaftszustands-Etikettvermittlungsweg für die Übertragung, wenn auf der physikalischen Übertragungsverbindung ein Fehler auftritt,
**dadurch gekennzeichnet, dass** es ferner enthält:
wenn der Fehler auf der physikalischen Übertragungsverbindung auftritt, während der Bereitschaftszustands-Etikettvermittlungsweg normal arbeitet, Verzögern der Ausgabe von Fehlerinformationen an andere Knoten durch zwei Endknoten der physikalischen Übertragungsverbindung, auf der der Fehler auftritt, über ein dynamisches Lenkungsprotokoll; wenn der Fehler auf der physikalischen Übertragungsverbindung und auf dem Bereitschaftszustands-Etikettvermittlungsweg gleichzeitig auftritt, unverzögertes Ausgeben von Fehlerinformationen an andere Knoten durch die zwei Endknoten der physikalischen Übertragungsverbindung, auf der der Fehler auftritt, über das dynamische Lenkungsprotokoll.

2. Verfahren zum Herstellen eines Arbeits-/Bereitschaftszustands-Übertragungswegs nach Anspruch 1, wobei das Konfigurieren eines Bereitschaftszustands-Etikettvermittlungswegs für die physikalische Übertragungsverbindung durch eines der Folgenden erzielt wird:
Verwenden einer Betriebsmittelreservierungsprotokoll-Verkehrserweiterung;
Verwenden eines Protokolls zur Etikettverteilung auf Beschränkungsbasis; und
Konfigurieren einer Etikettweiterleitungstabelle in jedem Knoten in dem Netz.

3. Verfahren zum Herstellen eines Arbeits-/Bereitschaftszustands-Übertragungswegs nach Anspruch 1 oder 2, wobei N Paare von Etikettvermittlungswegen für die physikalische Übertragungsverbindung konfiguriert werden und Übertragungsrichtungen jedes Paars von Etikettvermittlungswegen zueinander entgegengesetzt sind, wobei N eine natürliche Zahl ist.

4. Verfahren zum Herstellen eines Arbeits-/Bereitschaftszustands-Übertragungswegs nach Anspruch 1, 2 oder 3, wobei die physikalische Übertragungsverbindung von einer physikalischen Übertragungsverbindung, durch die der Bereitschaftszustands-Etikettvermittlungsweg verläuft, physikalisch unabhängig ist.

5. Verfahren zum Herstellen eines Arbeits-/Bereitschaftszustands-Übertragungswegs nach Anspruch 4, das ferner enthält: wenn die physikalische Übertragungsverbindung, auf der der Fehler auftritt, in den Normalzustand zurückkehrt, Weiterleiten des Pakets, das auf dem Bereitschaftszustands-Etikettvermittlungsweg übertragen wird, zu der physikalischen Übertragungsverbindung, die in den Normalzustand zurückgekehrt ist, für die Übertragung.

6. Verfahren zum Herstellen eines Arbeits-/Bereitschaftszustands-Übertragungswegs nach Anspruch 4, wobei: ein Kostenwert des Bereitschaftszustands-Etikettvermittlungswegs größer als ein Kostenwert der durch den Bereitschaftszustands-Etikettvermittlungsweg geschützten physikalischen Übertragungsverbindung und kleiner als eine Summe von Kostenwerten von physikalischen Übertragungsverbindungen, durch die der Etikettvermittlungsweg verläuft, konfiguriert wird.

7. Verfahren zum Herstellen eines Arbeits-/Bereitschaftszustands-Übertragungswegs nach Anspruch 6, wobei: falls wenigstens zwei Paare von Etikettvermittlungswegen für die physikalische Übertragungsverbindung konfiguriert sind, wenn der Fehler auf der physikalischen Übertragungsverbindung auftritt, Weiterleiten des auf der physikalischen Übertragungsverbindung zu übertragenden Pakets zu einem Bereitschaftszustands-Etikettvermittlungsweg mit einem minimalen Kostenwert für die Übertragung.

8. Verfahren zum Herstellen eines Arbeits-/Bereitschaftszustands-Übertragungswegs nach Anspruch 1, 5 oder 6, wobei das Weiterleiten des Pakets, das auf der physikalischen Übertragungsverbindung übertragen werden soll, auf der der Fehler auftritt, zu dem Bereitschaftszustands-Etikettvermittlungsweg für die Übertragung durch eines der Folgenden erzielt wird:
Modifizieren eines Listenelements, das zu der physikalischen Übertragungsverbindung gerichtet ist, auf der der Fehler auftritt, in einer Lenkungstabelle, die in einem Quellknoten auf der physikalischen Übertragungsverbindung, auf der der Fehler auftritt, gesichert ist, zu einem Listenelement, das zu dem Bereitschaftszustands-Etikettvermittlungsweg gerichtet ist; und
Umlenken eines Pakets, das auf der physikalischen Übertragungsverbindung übertragen wird, auf der der Fehler auftritt, zu dem Bereitschaftszustands-Etikettvermittlungsweg für die Übertragung in einem Schnittstellentreiber der physikalischen Übertragungsverbindung, auf der der Fehler auftritt.

9. Verfahren zum Herstellen eines Arbeits-/Bereitschaftszustands-Übertragungswegs nach Anspruch 1, wobei die physikalische Übertragungsverbindung ein faserinterner Steuerkanal oder ein faserexterner Steuerkanal ist.

10. Verfahren zum Herstellen eines Arbeits-/Bereitschaftszustands-Übertragungswegs nach Anspruch 9, das ferner das Detektieren, ob ein Fehler auf der physikalischen Übertragungsverbindung und auf dem Bereitschaftszustands-Etikettvermittlungsweg auftritt, durch periodisches Senden einer Fehlerdetektionsnachricht zu dem Netz enthält.

11. Verfahren zum Herstellen eines Arbeits-/Bereitschaftszustands-Übertragungswegs nach Anspruch 9, das ferner das Detektieren, ob ein Fehler auf einer physikalischen Übertragungsverbindung auftritt, die aus dem faserinternen Steuerkanal gebildet ist, über einen Mechanismus zum Detektieren eines Alarms in einem optischen Netz enthält.

12. Verfahren zum Herstellen eines Arbeits-/Bereitschaftszustands-Übertragungswegs nach Anspruch 1, wobei das Netz ein Netz zum Übertragen von Daten über IP ist.

13. Vorrichtung zum Herstellen eines Arbeits-/Bereitschaftszustands-Übertragungswegs, die enthält:
Mittel zum Konfigurieren eines Bereitschaftszustands-Etikettvermittlungswegs für eine physikalische Übertragungsverbindung in einem Netz; und
Mittel zum Weiterleiten eines auf der physikalischen Übertragungsverbindung zu übertragenden Pakets zu dem Bereitschaftszustands-Etikettvermittlungsweg für die Übertragung, wenn auf der physikalischen Übertragungsverbindung ein Fehler auftritt,
**dadurch gekennzeichnet, dass** die Vorrichtung ferner enthält:
Mittel zum verzögerten Ausgeben von Fehlerinformationen an andere Knoten durch zwei Endknoten der physikalischen Übertragungsverbindung, auf der der Fehler auftritt, über ein dynamisches Lenkungsprotokoll, wenn der Fehler auf der physikalischen Übertragungsverbindung auftritt, während der Bereitschaftszustands-Etikettvermittlungsweg normal arbeitet, und zum unverzögerten Ausgeben von Fehlerinformationen an andere Knoten durch die zwei Endknoten der physikalischen Übertragungsverbindung, auf der der Fehler auftritt, über das dynamische Lenkungsprotokoll, wenn der Fehler auf der physikalischen Übertragungsverbindung und auf dem Bereitschaftszustands-Etikettvermittlungsweg gleichzeitig auftritt.

## Revendications

1. Procédé de réalisation d'un chemin de transmission actif/de veille, comprenant les étapes suivantes :
configuration (S10) d'un Chemin à Commutation d'Etiquette de veille pour une liaison de transmission physique dans un réseau ; et
l'acheminement (S30) d'un paquet à transmettre sur la liaison de transmission physique jusqu'au Chemin à Commutation d'Etiquette de veille en vue de sa transmission quand une défaillance se produit sur la liaison de transmission physique ;
**caractérisé en ce qu'**il comprend en outre :
quand la défaillance se produit sur la liaison de transmission physique alors que le Chemin à Commutation d'Etiquette de veille fonctionne normalement, deux noeuds terminaux de la liaison de transmission physique sur laquelle la défaillance se produit délivrent avec un retard des informations de défaillance à d'autres noeuds par l'intermédiaire d'un protocole de routage dynamique ; quand la défaillance se produit sur la liaison de transmission physique et le Chemin à Commutation d'Etiquette de veille simultanément, les deux noeuds terminaux de la liaison de transmission physique sur laquelle la défaillance se produit délivrent à temps des informations de défaillance à d'autres noeuds par l'intermédiaire du protocole de routage dynamique.

2. Procédé de réalisation d'un chemin de transmission actif/de veille selon la revendication 1, dans lequel la configuration d'un Chemin à Commutation d'Etiquette de veille pour la transmission physique est réalisée par l'une d'une :
utilisation d'une Extension de Trafic de Protocole de Réservation de Ressource ;
utilisation d'un Protocole de Distribution d'Etiquette par Contrainte ; et
configuration d'une table d'acheminement d'étiquette dans chaque noeud du réseau.

3. Procédé de réalisation d'un chemin de transmission actif/de veille selon la revendication 1 ou 2, dans lequel N paires de Chemins à Commutation d'Etiquette sont configurées pour la liaison de transmission physique, et les sens de transmission de chaque paire de Chemins à Commutation d'Etiquette sont opposés l'un à l'autre, N étant un nombre naturel.

4. Procédé de réalisation d'un chemin de transmission actif/de veille selon la revendication 1, 2 ou 3, dans lequel la liaison de transmission physique est physiquement indépendante d'une liaison de transmission physique par laquelle passe le Chemin à Commutation d'Etiquette de veille.

5. Procédé de réalisation d'un chemin de transmission actif/de veille selon la revendication 4, comprenant en outre : quand la liaison de transmission physique sur laquelle se produit la défaillance redevient normale, l'acheminement du paquet transmis sur le Chemin à Commutation d'Etiquette de veille jusqu'à la liaison de transmission physique qui est redevenue normale en vue de sa transmission.

6. Procédé de réalisation d'un chemin de transmission actif/de veille selon la revendication 4, dans lequel : une valeur de coût du Chemin à Commutation d'Etiquette de veille est configurée comme étant une valeur supérieure à une valeur de coût de la liaison de transmission physique protégée par le Chemin à Commutation d'Etiquette de veille et inférieure à une somme des valeurs de coût de liaisons de transmission physiques par lesquelles passe le Chemin à Commutation d'Etiquette.

7. Procédé de réalisation d'un chemin de transmission actif/de veille selon la revendication 6, dans lequel : si au moins deux paires de Chemins à Commutation d'Etiquette sont configurées pour la liaison de transmission physique, quand la défaillance se produit sur la liaison de transmission physique, le paquet à transmettre sur la liaison de transmission physique est acheminé jusqu'à un Chemin à Commutation d'Etiquette de veille à valeur de coût minimum en vue de sa transmission.

8. Procédé de réalisation d'un chemin de transmission actif/de veille selon la revendication 1, 5 ou 6, dans lequel l'acheminement du paquet à transmettre sur la liaison de transmission physique sur laquelle la défaillance se produit jusqu'au Chemin à Commutation d'Etiquette de veille en vue de sa transmission est réalisé par l'une d'une :
modification en un élément de liste adressé au Chemin à commutation d'étiquette de veille d'un élément de liste adressé à la liaison de transmission physique sur laquelle se produit la défaillance dans une table de routage sauvegardée dans un noeud source sur la liaison de transmission physique sur laquelle se produit la défaillance ; et
réacheminement d'un paquet transmis sur la liaison de transmission physique sur laquelle se produit la défaillance jusqu'au Chemin à Commutation d'Etiquette de veille en vue de sa transmission dans un circuit pilote interface de la liaison de transmission physique sur laquelle se produit la défaillance.

9. Procédé de réalisation d'un chemin de transmission actif/de veille selon la revendication 1, dans lequel la liaison de transmission physique est un canal de commande dans la fibre ou un canal de commande hors fibre.

10. Procédé de réalisation d'un chemin de transmission actif/de veille selon la revendication 9, comprenant en outre le fait de détecter si une défaillance se produit ou non sur la liaison de transmission physique et le Chemin à Commutation d'Etiquette de veille par envoi périodique d'un message de détection de défaillance au réseau.

11. Procédé de réalisation d'un chemin de transmission actif/de veille selon la revendication 9, comprenant en outre le fait de détecter si une défaillance se produit sur une liaison de transmission physique composée du canal de commande dans la fibre par l'intermédiaire d'un mécanisme de détection d'alarme de réseau optique.

12. Procédé de réalisation d'un chemin de transmission actif/de veille selon la revendication 1, dans lequel le réseau est un réseau de transmission de données par IP.

13. Appareil de réalisation d'un chemin de transmission actif/de veille, comprenant :
un moyen de configuration d'un Chemin à Commutation d'Etiquette de veille pour une liaison de transmission physique dans un réseau ; et
un moyen d'acheminement d'un paquet à transmettre sur la liaison de transmission physique au Chemin à Commutation d'Etiquette de veille pour la transmission quand une défaillance se produit sur la liaison de transmission physique ;
**caractérisé en ce que** l'appareil comprend en outre :
un moyen d'envoi retardé d'informations de défaillance par deux noeuds terminaux de la liaison de transmission physique sur laquelle se produit la défaillance à d'autres noeuds par l'intermédiaire d'un protocole de routage dynamique quand la défaillance se produit sur la liaison de transmission physique alors que le Chemin à Commutation d'Etiquette de veille fonctionne normalement, et d'envoi à temps d'informations de défaillance par deux noeuds terminaux de la liaison de transmission physique sur laquelle se produit la défaillance à d'autres noeuds par l'intermédiaire du protocole de routage dynamique quand la défaillance se produit sur la liaison de transmission physique et le Chemin à Commutation d'Etiquette de veille simultanément.
